# EUROPEAN PATENT SPECIFICATION

(11) **EP 2 432 738 B1**
(45) Date of publication and mention of the grant of the patent: **01.03.2017**
(21) Application number: 10719521.6
(22) Date of filing: 14.05.2010
(51) Int. Cl.: C02F 1/44, A01N 37/34, A01N 37/30, C02F 1/76, C02F 1/42, C02F 1/70, C02F 101/10

(54) **Controlling bacteria in a water system containing a reducing agent with 2,2-dibromomalonamide and use of 2,2-dibromomalonamide**
Wasserbehandlung mit 2,2-Dibromomalonamiden in Systemen enthaltend ein Reduktionsmittel sowie Verwendung von 2,2-Dibromomalonamiden
Traitement de l'eau avec du 2,2-dibromo-malonamide dans un système contenant un agent réducteur ainsi que l'utilisation de 2,2-dibromo-malonamide

(30) Priority: 18.05.2009 US 179159 P
(43) Date of publication of application: 28.03.2012
(73) Proprietor: Dow Global Technologies LLC, Midland, MI 48674 (US)
(72) Inventor: YIN, Bei, Buffalo Grove IL 60089 (US); ROSENBURG, Steven, Shorewood MN 55331 (US); JONS, Steven, D., Eden Prairie MN 55346 (US)
(74) Representative: Beck Greener
(86) International application number: PCT/US2010/034936
(87) International publication number: WO 2010/135194

(56) References cited:
- WO-A1-2008/091453
- US-A- 3 647 610
- US-A- 4 232 041
- US-A1- 2002 128 311

## Description

### Cross-reference to Related Applications

This application claims the benefit of U.S. Provisional Application Ser. No. 61/179,159, filed May 18, 2009.

### Field of the Invention

The invention relates to methods for controlling bacteria in water systems that contain one or more reducing agents.

### Background of the Invention

Water systems provide fertile breeding grounds for algae, bacteria, viruses, fungi, and other pathogens. Microbial contamination can create a variety of problems, including aesthetic unpleasantries such as slimy green water, serious health risks such as fungal, bacterial, or viral infections, and clogging or corrosion of equipment.

Biofouling of water systems susceptible to microbial contamination is typically controlled through the use of biocidal agents. For instance, 2,2-dibromo-3-nitrilopropionamide ("DBNPA") is a commercially available biocide that is particularly desirable because it is a fast acting, low cost material that exhibits efficacy against a broad spectrum of microorganisms.

It is known, however, that various physical and/or chemical conditions in the water system can result in the premature deactivation of the biocide, rendering the biocide essentially ineffective before the desired microbial control has been achieved. As an example, in many paper mills, the process water (white water) contains carryover sulfite ion from treatment of the stock with sodium sulfite. In the oil and gas industry, bisulfite is added to injection or fracturing water or fluids as an oxygen scavenger. In addition, certain microorganisms that reside within paper making white water, as well as other industrial waters, can produce reducing metabolites such as hydrogen sulfide. Sulfites, bisulfites, and sulfides are reducing agents that are known to quickly deactivate biocides such as 2,2-dibromo-3-nitrilopropionamide (DBNPA), rendering the biocides prematurely ineffective.

It would be a significant advance in the art to provide biocides that are fast acting, long lasting, and that are stable when subjected to potentially deactivating conditions in the water system, such as the presence of reducing agents.

WO 2008/091453 discloses a method of treating water for municipal use comprising treating the feedwater stream on the feed side of a reverse osmosis membrane with a non-oxidizing, bromine-containing biocide in the substantial absence of a reducing agent, such that biofouling of the membrane is reduced or prevented, and measuring the produced water stream on the permeate side for the presence of bromine-containing compounds.

### BRIEF SUMMARY OF THE INVENTION

The invention provides a method for controlling bacteria in a water system that contains a reducing agent, selected from a sulfite, a bisulfite, or a sulfide, in an amount of from 10 ppm to 200 ppm. The method comprises adding from 5 ppm to 500 ppm by weight 2,2-dibromomalonamide to the water system.

### DETAILED DESCRIPTION OF THE INVENTION

As noted above, the invention relates to methods for controlling bacteria in water systems that contain one or more reducing agents, selected from a sulfite, a bisulfite, or a sulfide, in an amount of from 10 ppm to 200 ppm. The method comprises adding from 5 ppm to 500 ppm by weight 2,2-dibromomalonamide to the water system. The inventors have surprisingly discovered that 2,2-dibromomalonamide is more resistant to deactivation by reducing agents in the water system than other biocides, including the commercial compound DBNPA. For instance, the Examples below demonstrate that the decrease in efficacy of 2,2-dibromomalonamide (DBMAL), is remarkably less than that for DBNPA (a comparative biocide) when the efficacy of both is compared in a water system containing sulfite ion (an example of a reducing agent).

The term "2,2-dibromomalonamide" means a compound of the following formula:

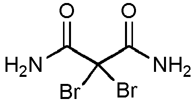

2,2-dibromomalonamidecan be prepared by those skilled in the art using well known literature techniques.

2,2-dibromomalonamide is useful for controlling bateria in water systems that contain reducing agent. Such water systems include, but are not limited to, paper and pulp mill stock tank and process water, paper making white water, oil and gas field injection, fracturing, and produced water, oil and gas wells and reservoirs, deaeration tower, oil and gas operation and transportation systems, oil and gas field functional fluids, oil and gas wells and reservoirs, oil and gas separation system and storage tanks, oil and gas pipelines, gas vessels, ballast water, metal working fluids, leather making systems and membrane-based filtration systems. Preferred water systems are paper and pulp mill process water, paper making white water, oil and gas field injection or fracturing or produced water or fluids, metal working fluids and membrane-based filtration systems.

The presence of reducing agent in the water systems of the invention can result from a variety of sources. For instance, in many paper mills, the process water (white water) can contain carryover sulfite, a reducing agent, from treatment of the paper stock with sodium sulfite. In the oil and gas industry, bisulfite is added to injection or fracturing water or fluids as oxygen scavenger. Also, certain microorganisms that reside within industrial water, such as paper making white water, oil and gas field injection or fracturing or produced water or fluids, oil and gas wells and reservoir, oil and gas field operation, separation, transportation, and storage systems, ballast water, metal working fluids, and leather making systems, can produce reducing metabolites such as hydrogen sulfide, also a reducing agent. Thus, reducing agents that may be found in the water systems include sulfite ion, bisulfite ion, or sulfides such as hydrogen sulfide. The water system of the invention contains between 10 ppm and about 200 ppm by weight of reducing agent.

In addition to its resistance to reducing agents, 2,2-dibromomalonamide is also surprisingly more resistant to hydrolysis at near-neutral-to-alkaline pH than other biocides. For instance, the Examples below demonstrate that at pH 6.9, 2,2-dibromomalonamide (DBMAL) is remarkably more stable than DBNPA (a comparative biocide). No loss of DBMAL is detected over 96 hours whereas 84% the DBNPA is lost in this same time frame at identical conditions.

Thus, in a further embodiment, 2,2-dibromomalonamide is used in a method for controlling microorganisms in a water system that contains a reducing agent, wherein the water system has a pH of 5 or greater. In some embodiments, the pH is 6 or greater. In further embodiments, the pH is 7 or greater. In still further embodiments, the pH is 8 or greater.

Representative membrane-based filtration systems include those comprising one or more semi-permeable membranes, including but not limited to: micro filtration, ultrafiltration, nanofiltration, reverse osmosis and ion-exchange membranes. Applicable systems include those comprising a single type of membrane (e.g. microfiltration) and those comprising multiple types of membranes (e.g. ultrafiltration and reverse osmosis). For example, a membrane-based filtration system may comprise an upstream microfiltration or ultrafiltration membrane and a downstream nanofiltration or reverse osmosis membrane.

The subject biocidal compound may be added to a feed solution prior to filtration, (e.g. added to a storage tank or pond containing feed solution to be treated) or during filtration, (e.g. dosed into a pressurized feed solution during filtration). Moreover, the subject biocidal compound may be added to cleaning or storage solutions which contact the membrane. For purposes of this description, any aqueous solution (e.g. raw feed water, cleaning solution, membrane storage solution, etc.) contacting a membrane of a system is referred to as a "feed solution." In one embodiment, the feed solution comprises a storage solution in which a membrane is immersed. US 7,156,997 describes an exemplary package assembly for storing membranes.

When used within a system having both micro or ultrafiltration and nanofiltration or reverse osmosis membranes, the subject biocidal compound provides biocidal effect to each membrane (e.g. both upstream and downstream membranes).

The portion of biocidal compound rejected by a membrane(s) may be recovered from the concentrate stream and recycled for use in subsequent treatments, (e.g. directed back to a storage tank or dosed within incoming feed). The recycle of the biocidal compound may be part of an intermittent or continuous process.

In many membrane-based filtration systems, the pH of the feed solution is at least 7, often at least 8, in some embodiments at least 9, and in other embodiments at least 10. Examples of such membrane-based systems are described US 6,537,456 and US 7,442,309. Moreover, membranes of many systems are commonly cleaned or stored with feed solutions having pH values of at least 11 and in some embodiments at least 12. Unlike DBNPA (as described in WO 2008/091453), the subject biocidal compound remains effective under such neutral and alkaline conditions. As a consequence, the subject biocidal compound may be added to a wider breath of feed solutions (e.g. pH adjusted aqueous feeds, aqueous cleaning solutions, aqueous storage solutions) used in connection with membrane-based filtration systems.

The type of membranes used in such systems are not particularly limited and include flat sheet, tubular and hollow fiber. One preferred class of membranes include thin-film composite polyamide membranes commonly used in nanofiltration and reverse osmosis applications, as generally described in US 4,277,344; US 2007/0251883; and US 2008/0185332. Such nanofiltration and/or reverse osmosis membranes are commonly provided as flat sheets within a spiral wound configuration. Polyamide membranes are sensitive to many of chlorine compounds (e.g. chlorine, hypochlorous acid, hypochlorite) which are commonly used to disinfect water systems. In order to neutralize such chlorine compounds, reducing agents such as bisulfite, sulfite or sulfide are often added to feed solutions at a point upstream from the polyamide membrane. Unlike DBNPA, the subject biocidal compound is more resistant to deactivation by such reducing agents.

Non-limiting examples of microfiltration and ultrafiltration membranes include porous membranes made from a variety of materials including polysulfones, polyethersulfones, polyamides, polypropylene and polyvinylidene fluoride. Such micro and ultrafiltration membranes are commonly provided as hollow fibers.

2,2-dibromomalonamide is added to the water system in an amount of from 5 ppm to 500 ppm by weight, more preferably at least 10 ppm, or at least 50 ppm, is generally adequate. The amount is preferably 300 ppm or less, or 200 ppm or less, or 100 ppm or less.

2,2-dibromomalonamide can be used in the water system with other additives such as, but not limited to, surfactants, ionic/nonionic polymers and scale and corrosion inhibitors, oxygen scavengers, and/or additional biocides.

2,2-dibromomalonamide is surprisingly resistant to deactivation by reducing agents than other biocides, including the commercial compound DBNPA. 2,2-dibromomalonamide is consequently useful for controlling bacteria in a broader range of water systems than currently known biocides and therefore represent a significant advance to the industry.

For the purposes of this specification, the words "control" and "controlling" should be broadly construed to include within their meaning, and without being limited thereto, inhibiting the growth or propagation of bacteria, killing bacteria, disinfection, and/or preservation.

By "hydroxyalkyl" is meant an alkyl group (i.e., a straight and branched chain aliphatic group) that contains 1 to 6 carbon atoms and is substituted with a hydroxyl group. Examples include, but are not limited to, hydroxymethyl, hydroxyethyl, 2-hydroxypropyl, 3-hydroxypropyl, and the like.

"Halogen" refers to fluoro, chloro, bromo, or iodo.

Unless otherwise indicated, ratios, percentages, parts, and the like used herein are by weight.

The following examples are illustrative of the invention but are not intended to limit its scope.

### EXAMPLES

The following compositions are evaluated in the Examples:
2,2-Dibromo-3-nitrilopropionamide ("DBNPA") is obtained from The Dow Chemical Company.
2,2-Dibromomalonamide ("DBMAL") is obtained from Johnson Mathey.
CMIT/MIT (5-chloro-2-methyl-4-isothiazolin-3-one and 2-methyl-4-isothiazolin-3-one) is obtained from The Dow Chemical Company.
Glutaraldehyde is obtained from The Dow Chemical Company.
Alkyl dimethyl benzyl ammonium chloride (ADBAC) is obtained from Lonza.
1-Bromo-3-chloro-5,5-dimethylhydantoin ("BCDMH") is obtained from Clariant Corporation.

### Sodium hypochlorite is obtained from Clorox

### Reference Example 1

### Preparation of 2,2-Dibromo-2-cyano-N-(3-hydroxypropyl)acetamide (DBCHA)

0.1 mole of 3-amino-1-propanol (7.51 grams) is added to a solution of 0.1 mole methyl cyanoacetate (10.1 grams) in methanol (40 grams). The mixture is stirred and heated to 60 °C for 30 minutes. The methanol solvent is vacuum stripped from the reaction product. The reaction product, without any further purification necessary, is dissolved in water and reacted with 0.1 mole of bromine (16.0 grams) and 0.03 mole of sodium bromate (5.0 grams), The reaction temperature is kept below 30 °C. After the bromine and sodium bromate addition is complete the reaction mixture is allowed to stir for 30 minutes before neutralizing to pH 3 to 4 with dilute sodium hydroxide. Yield is 0.09 mole of 2,2-dibromo-2-cyano-N-(3-hydroxypropyl)acetamide (28 grams).

### Example 2

### Stability Against Hydrolyses: Comparison of DBMAL and DBNPA

Dilute solutions (less than 0.5 wt%) of DBMAL and DBNPA are prepared at three different pHs. The pH is set and maintained, by using standard buffer solutions, at pH 6.9, 8.0 and 9.0. These solutions are then held at constant temperature at either -1 °C or 30 °C. Periodically, aliquots are analyzed by HPLC to determine the level of DBMAL or DBNPA remaining. Results are shown in Table 1.

**Table 1.**

| | **Three DBNPA Samples** | | | **Three DBMAL Samples** | | |
|---|---|---|---|---|---|---|
| Hours | pH 9, T=-1C | pH 8, T=-1C | pH 6.9, T=30C | pH 9, T=-1C | pH 8, T=-1C | pH 6.9, T=30C |
| 0 | 3842 | 4068 | 3991 | 4576 | 3866 | 3746 |
| 2 | 2818 | 3998 | 4155 | 4022 | 4031 | 4612 |
| 24 | 1256 | 3506 | 2557 | 3891 | 4191 | 3857 |
| 48 | 659 | 3578 | 1361 | 3603 | 4187 | 3935 |
| 72 | 363 | 3149 | 918 | 4018 | 4290 | 3966 |
| 96 | 239 | 3070 | 658 | 3456 | 3883 | 4212 |
| | | | | | | |

| Hours | **Calculated Percent Reduction of the Active Ingredient at Various Times** | | | | | |
|---|---|---|---|---|---|---|
| 48 | 83 | 12 | 66 | 21 | 0 | 0 |
| 72 | 91 | 23 | 77 | 12 | 0 | 0 |
| 96 | 94 | 25 | 84 | 24 | 0 | 0 |

Table 1 shows that even at near-neutral conditions (pH = 6.9) and a temperature of 30 °C, DBMAL is remarkably more stable than DBNPA (a comparative biocide). No loss of DBMAL is detected over 96 hours whereas 84% the DBNPA is lost in this same time frame at identical conditions.

### Example 3

### Testing the Resistance of Biocide to Sulfite Deactivation by Pretreating Biocide with Sulfite before Efficacy Testing: Comparison of DBMAL and DBNPA

DBMAL and DBNPA are pre-mixed with sulfite by adding to a paper mill white water sample (at about pH 7.5) containing 80 ppm sulfite. 50 ppm to 80 ppm sulfite is representative of a sulfite level for pulp and paper applications. The same white water sample without sulfite is used as none sulfite comparison and the same whitewater samples containing no biocide and with or without sulfite are used as controls. The water samples are incubated at 37° C for 5 min and then are inoculated with field isolated bacteria at a concentration of approximately 10⁷ CFU/mL. The mixtures are then incubated at 37° C for 4 hours. After that, the viable bacteria in the mixtures is enumerated using a serial dilution method. Table 2 compares the efficacy of sulfite-pretreated DBMAL and DBNPA with non-sulfite treated DBMAL and DBNPA

**Table 2. Comparison of efficacy of DBMAL and DBNPA in sulfite containing water**

| **Biocide** | **Sulfite treatment** | **Bacterial log₁₀ reduction after treatment of biocide at different concentrations for 4hrs** | | | |
|---|---|---|---|---|---|
| | | 100.0 ppm | 66.7 ppm | 44.5 ppm | 29.7 ppm |
| **DBMAL** | non-sulfite treated | 4.7 | 5.0 | 4.3 | 1.7 |
| | 80ppm sulfite pretreated | 2.3 | 2.3 | 1.0 | 1.0 |
| | Decrease of efficacy due to sulfite pretreatment | 2.4 | 2.7 | 3.3 | 0.7 |
| **DBNPA*** | non-sulfite treated | >=5.7 | >=5.7 | >=5.7 | 4.7 |
| | 80ppm sulfite pretreated | 2.3 | 1.3 | 1.3 | 1.3 |
| | Decrease of efficacy due to sulfite pretreatment | >=3.4 | >=4.4 | >=4.4 | >=3.4 |

| | | | | | |
|---|---|---|---|---|---|
| *Comparative example. | | | | | |

When premixed with 80 ppm sulfite, the decrease in efficacy of DBMAL is much smaller than that of DBNPA, which indicates that the biocidal activity of DBMAL is more tolerant to reducing agent than that of DBNPA.

### Example 4

### Biocidal Efficacy in Presence of Sulfite: Comparison of DBMAL and DBNPA

DBMAL and DBNPA are added to a contaminated paper mill white water sample (approximately 10⁶ CFU/mL bacteria, pH 7.6) containing about 80 ppm sulfite. at final active biocides concentrations of 50 ppm and 25 ppm. The same contaminated whitewater samples without biocide are used as controls. The mixtures are incubated at 37 °C with shaking (100 RPM) for 96 hrs. At 1 hr, 3 hrs, 24 hrs, 48 hrs, 72 hrs and 96 hrs time points after the biocide addition, the valid bacteria in the mixtures are enumerated using a serial dilution method and the bacterial log₁₀ reduction is calculated by comparing the valid bacteria number of biocide treated water aliquots to that of controls. Starting from 24 hrs after the sampling, the mixtures are reinoculated with field isolated bacteria at about 10⁵ CFU/mL and are supplied with additional sulfite to keep an 80 ppm sulfite concentration. Table 3 shows the efficacy of DBMAL and DBNPA at different time point, expressed as log₁₀ reduction in numbers of bacteria.

**Table 3. Comparison of the biocidal efficacy of DBMAL and DBNPA against bacteria in sulfite-containing white water (1-96 hours)**

| **Biocide** | | **Bacterial log₁₀ reduction at different time point after biocide addition** | | | | | |
|---|---|---|---|---|---|---|---|
| | | 1hr | 3hr | 24hrs | 48hrs | 72hrs | 96hrs |
| **Active concentration** | **Chemical** | | | | | | |
| 50ppm | DBMAL | >=4.0 | 3.8 | >=4. 3 | 4.3 | 4.2 | 3.8 |
| | DBNPA* | >=4.0 | >=4. 0 | >=4. 3 | 4.5 | 1.0 | 0.7 |
| 25ppm | DBMAL | 2.5 | 3.2 | 4.2 | 3.7 | 1.5 | 1.2 |
| | DBNPA* | >=4.0 | >=4. 0 | 3.3 | 1.5 | 0.3 | 0 |

| | | | | | | | |
|---|---|---|---|---|---|---|---|
| *Comparative example. | | | | | | | |

As indicated in table 3, DBMAL shows an initial slower killing action than DBNPA, however, its effectiveness (>3 log₁₀ killing) lasts for two more days than that of DBNPA at the same active concentration of 50 ppm and lasts for one more day than that of DBNPA at the same active concentration of 25 ppm.

### Example 5

### Biocidal Efficacy in Presence of Sulfite: Comparison of DBMAL and Other Biocides

Sterile artificial White Water (111 mg of CaCl₂, 60 mg of MgSO₄, 168 mg of NaHCO₃, 140 mg of K₂HPO₄, 480 mg of NH₄Cl, 1.04 mg of FeCl₃.6H₂O, 1.48 mg of Na₂EDTA, 3000 mg of Dextrose, 10 mg of Yeast Extract, in 1L water, pH 8.1) is contaminated with field isolated bacteria at a concentration of approximately 10⁷ CFU/mL. The aliquots of this contaminated water are then treated with eight dosage levels of DBMAL and six other commonly used biocides in paper mill white water application. The same aliquots of the contaminated water without biocide are used as controls. After incubating at 37 °C for 4 hours, the valid bacteria in the aliquots are enumerated using a serial dilution method and the bacterial log₁₀ reduction is calculated by comparing the valid bacteria number of biocide treated water aliquots to that of controls. Table 4 compares the efficacy of the seven biocides, expressed by bacterial log₁₀ reduction. As indicated, DBMAL is one of most effective molecules in this comparison study.

**Table 4. Comparison of the biocidal efficacy of seven biocides against bacteria isolated from paper mill white water**

| **Biocide** | **Minimum dosage (ppm, active) required for at least 3 log₁₀ reduction in numbers of bacteria in 4 hours** |
|---|---|
| **Glutaraldehyde*** | 163.84 |
| **Glutaraldehyde/ADBAC*** | 163.84 |
| **CMIT/MIT*** | 8.40 |
| **DBNPA*** | 128.00 |
| **DBMAL** | 81.92 |
| **monochloramine *** | 8.00 (chlorine) |
| **BCDMH* (active ppm is measured by available bromine & chlorine)** | 71.74 (chlorine/bromine) |

| | |
|---|---|
| *Comparative example. | |

Although both of the oxidizing biocides, BCDMH and monochloramine (prepared by mixing appropriate amount of ammonium bromide and sodium hypochlorite), show good efficacy, they have corrosion concerns and aren't long-lasting biocides.

While the invention has been described above according to its preferred embodiments, it can be modified within the scope of this disclosure. This application is therefore intended to cover any variations, uses, or adaptations of the invention using the general principles disclosed herein. Further, the application is intended to cover such departures from the present disclosure as come within the known or customary practice in the art to which this invention pertains and which fall within the limits of the following claims.

## Claims

1. A method for controlling bacteria in a water system, the method comprising adding from 5 ppm to 500 ppm by weight 2,2-dibromomalonamide to the water system, wherein the water system contains a reducing agent in an amount of from 10 ppm to 200 ppm and the reducing agent is a sulfite, a bisulfite, or a sulfide.

2. A method according to claim 1 wherein the water system has a pH of 5 or greater.

3. A method according to claim 1 or claim 2 wherein the water system is: paper and pulp mill stock tank and process water, paper making white water, oil and gas field injection, fracturing, and produced water, oil and gas wells and reservoirs, deaeration tower, oil and gas operation and transportation systems, oil and gas field functional fluids, oil and gas wells and reservoirs, oil and gas separation system and storage tanks, oil and gas pipelines, gas vessels, ballast water, metal working fluids, leather making systems, and membrane-based filtration systems.

4. A method according to claims 1-3 wherein the system comprises a membrane-based filtration system comprising at least one semi-permeable membrane selected from at least one of: microfiltration, ultrafiltration, nanofiltration, reverse osmosis and ion exchange membranes; wherein the method comprises adding 2,2-dibromomalonamide to a feed solution followed by contacting the feed solution with the semi-permeable membrane.

5. A method according to claims 1-4 wherein the membrane-based filtration system comprises at least: i) one microfiltration or ultrafiltration membrane and ii) at least one nanofiltration or reverse osmosis membrane.

6. A method according to claims 1-5 wherein the feed solution has a pH of at least 8.

7. Use of 2,2-dibromomalonamide for controlling bacteria in a water system, wherein the water system contains a reducing agent in an amount of from 10 ppm to 200 ppm.

## Patentansprüche

1. Ein Verfahren zur Bekämpfung von Bakterien in einem Wassersystem, wobei das Verfahren das Zugeben von 5 Gewichts-ppm bis 500 Gewichts-ppm 2,2-Dibrommalonamid zu dem Wassersystem beinhaltet, wobei das Wassersystem ein Reduktionsmittel in einer Menge von 10 ppm bis 200 ppm enthält und das Reduktionsmittel ein Sulfit, ein Bisulfit oder ein Sulfid ist.

2. Verfahren gemäß Anspruch 1, wobei das Wassersystem einen pH-Wert von 5 oder mehr aufweist.

3. Verfahren gemäß Anspruch 1 oder Anspruch 2, wobei das Wassersystem Folgendes ist: Papier- und Faserstoffwerk-Lagertank und -Prozesswasser, Weißwasser zur Papierfabrikation, Öl- und Gasfeldinjektions-, Fracking- und Förderwasser, Öl- und Gasquellen und -reservoirs, Entlüftungsturm, Systeme zum Betrieb und Transport von Öl und Gas, funktionelle Fluide für Öl- und Gasfeld, Öl- und Gasquellen und -reservoirs, Trennungssystem und Lagertanks für Öl und Gas, Öl- und Gas-Pipelines, Gasbehälter, Ballastwasser, Metallverarbeitungsfluide, Systeme zur Lederfabrikation und membranbasierte Filtrationssysteme.

4. Verfahren gemäß den Ansprüchen 1-3, wobei das System ein membranbasiertes Filtrationssystem beinhaltet, das mindestens eine halbdurchlässige Membran beinhaltet, ausgewählt aus mindestens einem von Folgendem: Mikrofiltration, Ultrafiltration, Nanofiltration, Umkehrosmose- und lonenaustauschmembranen; wobei das Verfahren das Zugeben von 2,2-Dibrommalonamid zu einer Zufuhrlösung beinhaltet, gefolgt von dem In-Kontakt-Bringen der Zufuhrlösung mit der halbdurchlässigen Membran.

5. Verfahren gemäß den Ansprüchen 1-4, wobei das membranbasierte Filtrationssystem mindestens Folgendes beinhaltet: i) eine Membran zur Mikrofiltration oder Ultrafiltration und ii) mindestens eine Membran zur Nanofiltration oder Umkehrosmose.

6. Verfahren gemäß den Ansprüchen 1-5, wobei die Zufuhrlösung einen pH-Wert von mindestens 8 aufweist.

7. Eine Verwendung von 2,2-Dibrommalonamid zur Bekämpfung von Bakterien in einem Wassersystem, wobei
das Wassersystem ein Reduktionsmittel in einer Menge von 10 ppm bis 200 ppm enthält.

## Revendications

1. Une méthode pour lutter contre des bactéries dans un système d'eau, la méthode comprenant l'ajout de 5 ppm à 500 ppm en poids de 2,2-dibromomalonamide au système d'eau, dans laquelle le système d'eau contient un réducteur en une quantité allant de 10 ppm à 200 ppm et le réducteur est un sulfite, un bisulfite, ou un sulfure.

2. Une méthode selon la revendication 1 dans laquelle le système d'eau a un pH de 5 ou plus.

3. Une méthode selon la revendication 1 ou la revendication 2 dans laquelle le système d'eau est : de l'eau de traitement et un réservoir de stockage d'usine de papier et de pâte à papier, de l'eau blanche de fabrication de papier, de l'eau de production, de fracturation ou d'injection pour champ de pétrole et de gaz, des gisements et des puits de pétrole et de gaz, une tour de désaération, des systèmes de transport et d'exploitation de pétrole et de gaz, des fluides fonctionnels pour champ de pétrole et de gaz, des gisements et des puits de pétrole et de gaz, des réservoirs de stockage et de système de séparation de pétrole et de gaz, des pipelines de pétrole et de gaz, des navires gaziers, de l'eau de ballast, des fluides d'usinage de métaux, des systèmes de fabrication de cuir, et des systèmes de filtration membranaire.

4. Une méthode selon les revendications 1 à 3 dans laquelle le système comprend un système de filtration membranaire comprenant au moins une membrane semi-perméable sélectionnée parmi au moins un élément d'entre : des membranes de microfiltration, d'ultrafiltration, de nanofiltration, d'osmose inverse et échangeuses d'ions ; la méthode comprenant l'ajout de 2,2-dibromomalonamide à une solution d'alimentation suivi par la mise en contact de la solution d'alimentation avec la membrane semi-perméable.

5. Une méthode selon les revendications 1 à 4 dans laquelle le système de filtration membranaire comprend au moins : i) une membrane de microfiltration ou d'ultrafiltration et ii) au moins une membrane de nanofiltration ou d'osmose inverse.

6. Une méthode selon les revendications 1 à 5 dans laquelle la solution d'alimentation a un pH d'au moins 8.

7. Utilisation du 2,2-dibromomalonamide pour lutter contre des bactéries dans un système d'eau, le système d'eau contenant un réducteur en une quantité allant de 10 ppm à 200 ppm.
